(19) Europäisches Patentamt
European Patent Office
Office européen des brevets

(11) **EP 1 266 825 B1**

(12) **FASCICULE DE BREVET EUROPEEN**

(45) Date de publication et mention
de la délivrance du brevet:
**15.08.2007   Bulletin 2007/33**

(51) Int Cl.:
*B64D 7/08* *(2006.01)*    *F42B 10/48* *(2006.01)*

(21) Numéro de dépôt: **02291476.6**

(22) Date de dépôt: **13.06.2002**

(54) **Procédé de séparation d'une arme aéroportée propulsée par rapport à un porteur**

Verfahren zum Trennen eines selbstangetriebenen Flugkörper von seinem Träger

Method for separating an airborne rocket from its carrier

(84) Etats contractants désignés:
**DE GB IT**

(30) Priorité:  **15.06.2001   FR 0107858**

(43) Date de publication de la demande:
**18.12.2002   Bulletin 2002/51**

(73) Titulaire: **Sagem Défense Sécurité**
**75015 Paris (FR)**

(72) Inventeurs:
• **Decloux, Xavier**
**75116 Paris (FR)**

• **Mathieu, Benoit**
**95620 Parmain (FR)**
• **Dubreuil, Francois**
**75008 Paris (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
**EP-A- 0 562 831**        **FR-A- 2 657 157**
**FR-A- 2 681 676**        **US-A- 4 135 686**
**US-A- 4 290 364**        **US-A- 5 036 466**
**US-A- 5 931 874**

EP 1 266 825 B1

**Description**

DOMAINE TECHNIQUE GENERAL.

L'invention concerne la séparation - ou le largage - des armes aéroportées propulsées.

Elle trouve en particulier avantageusement application pour la séparation en haute altitude ou en très basse altitude des armes subsoniques aéroportées comportant un propulseur.

ETAT DE L'ART.

PRESENTATION.

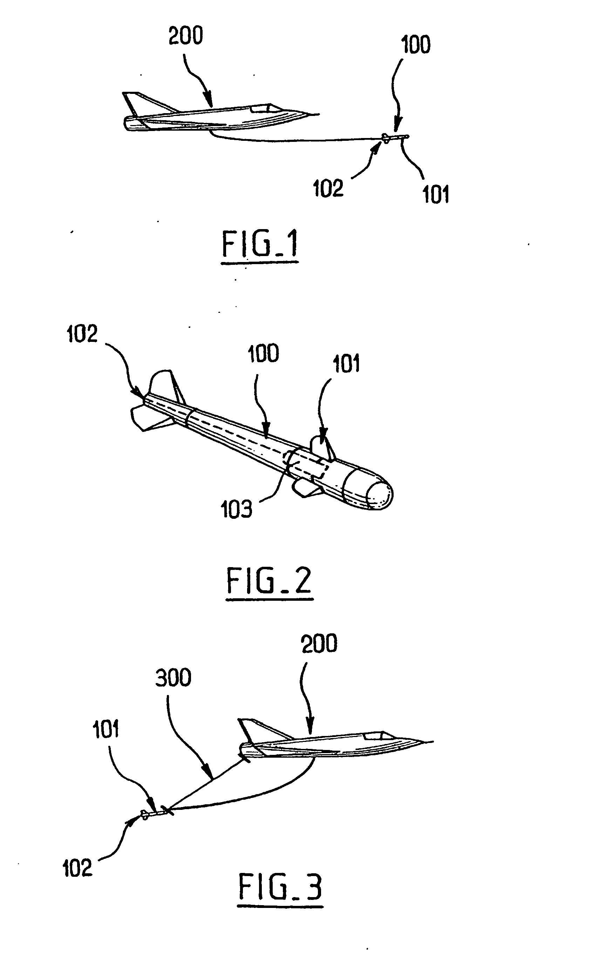

On a illustré schématiquement sur la figure 1 la séparation d'une arme 100 par rapport à un porteur 200.

Une telle arme 100 comporte par exemple, ainsi que l'illustre la figure 2, des moyens de pilotage 101, ainsi que des moyens de propulsion 102. Les moyens de pilotage 101 sont par exemple des gouvernes orientables. Ils sont commandés, avec les moyens de propulsion 102, par des moyens 103 de contrôle et de gestion de trajectoire, qui comprennent par exemple une centrale inertielle et un microprocesseur, celui-ci gérant les mouvements des gouvernes de pilotage 101 de l'arme 100, ainsi que les moyens de propulsion 102.

La demande de brevet EP 0 562 831 A1, qui représente l'art antérieur le plus proche pour les revendications 1, 6, 7, décrit un appareil de lancement de missile comprenant un adaptateur couplé à un missile et utilisé pour stabiliser le vol du missile pendant la phase suivant immédiatement le lancement.

Généralement, la séparation de l'arme s'effectue vers l'avant du porteur ou vers le bas.

Les séparations vers l'avant du porteur 200 sont les plus courantes. Pour les tirs en très basse altitude (TBA) notamment, une séparation molle vers le bas n'est pas souhaitable, car le comportement de l'arme serait alors semblable à celui du porteur. L'arme resterait très proche du porteur pendant un laps de temps relativement important, ce qui pourrait être dangereux pour ce dernier, notamment pour le cas où l'arme rencontrerait un obstacle issu du sol par exemple.

La séparation par l'avant a quant à elle l'avantage de fournir une énergie de propulsion très importante à l'arme. Ainsi l'arme dispose de l'énergie nécessaire pour effectuer une ressource positive et éviter les obstacles.

(On rappelle qu'une ressource est une prise d'incidence, c'est à dire une inclinaison de l'axe de l'arme par rapport à sa trajectoire. Elle est dite positive ou négative selon que l'arme pointe vers le haut ou vers le sol.)

La séparation par l'avant est également courante en haute altitude (HA).

INCONVENIENTS.

La séparation d'une arme vers l'avant présente de nombreux inconvénients.

En particulier, elle nécessite une forte énergie pour assurer la séparation par rapport au porteur.

Ceci impose des excursions en vitesses dans le domaine supersonique, ce qui cause des pertes d'énergie importantes en raison du surplus de traînée.

Ceci impose également des contraintes d'environnement (accélérations et vibrations) importantes, qui se répercutent en termes de coûts de conception sur les équipements et les logiciels de contrôle de vol. Il est en effet nécessaire de pouvoir valider des domaines de perturbations importants.

On notera en outre que l'arme crée un passage en transsonique près de l'avion.

Par ailleurs, dans le cas d'une séparation par l'avant, l'arme est pilotée en boucle fermée dès la séparation. C'est le cas typique d'un missile air-air qui ne dispose que de très peu de temps pour intercepter sa cible.

Il en résulte une potentialité de risques importants : un dysfonctionnement du propulseur, d'un servomoteur de gouverne ou d'un des éléments de la chaîne de contrôle du vol conduit à des probabilités non négligeables de collisions avec l'avion porteur.

On comprend que ceci impose la conception de systèmes logiciels et de matériels qui, pour sécuriser le système arme/porteur, sont nécessairement compliqués et chers.

PRESENTATION DE L'INVENTION.

L'invention permet de pallier ces inconvénients.

La séparation en champ proche, c'est-à-dire lorsque l'arme reste relativement près du porteur durant un temps relativement long, est assurée sans imposer de manoeuvre au porteur. Les mêmes manoeuvres sont employées à chaque séparation pour toute une catégorie d'armes, de façon reproductible. Ces manoeuvres sont enclenchées selon la valeur d'un paramètre déterminé en fonction de la vitesse et de l'altitude de l'arme.

L'arme peut également éviter un obstacle lorsqu'elle se situe en très basse altitude.

Les moyens employés pour résoudre les problèmes ne comportent pas de moyens logiciels compliqués et onéreux.

A cet effet, l'invention propose un procédé pour la séparation par rapport à un porteur de type aéronef, conforme à la revendication 1.

L'invention est avantageusement complétée par les caractéristiques suivantes, prises seules ou en une quelconque de leur combinaison techniquement possible :

- on déclenche la propulsion sensiblement lorsque l'arme a atteint une pente de montée ou de descente qui correspond au facteur de charge maximal.

- on détermine si l'on donne à l'arme une incidence positive ou une incidence négative en fonction de la vitesse et de l'altitude de l'arme et du porteur à la séparation.

- on détermine en fonction de la vitesse et de l'altitude de l'arme et du porteur à la séparation une valeur de vitesse conventionnelle, en ce qu'on compare la valeur de vitesse conventionnelle ainsi obtenue à une valeur seuil, et en ce que, en fonction du résultat de cette comparaison, on détermine si l'on donne à l'arme une incidence positive ou une incidence négative.

- une distance de sécurité minimale est de 50 m ou supérieure.

L'invention concerne également une arme aéroportée (Revendication 6) du type comportant des moyens de propulsion ainsi que des moyens permettant son guidage automatique sur une cible qui lui est désignée et qui comporte des moyens aptes à commander les moyens de guidage pour mettre en oeuvre le procédé de séparation décrit dans les développements précédents.

Enfin, l'invention concerne un système pour la gestion du tir (Revendication 7), à partir d'un porteur de type aéronef, d'une arme aéroportée comportant des moyens de propulsion et ainsi que des moyens permettant son guidage automatique sur une cible, qui comporte dans l'aéronef des moyens permettant l'affichage à destination d'un pilote d'une information relative à la vitesse conventionnelle déterminée ou susceptible de l'être lors de la mise en oeuvre d'un procédé conforme à celui décrit dans les développements précédents.

PRESENTATION DES FIGURES

D'autres caractéristiques et avantages de l'invention ressortiront de la description qui suit qui est purement illustrative et non limitative et qui doit être lue en regard des dessins annexés sur lesquels :

- la figure 1 illustre une séparation d'une arme vers l'avant du porteur dont elle se sépare ;
- la figure 2 est une représentation schématique d'une telle arme ;
- la figure 3 le principe de la séparation d'une arme vers l'arrière du porteur ;
- la figure 4 illustre des étapes de guidage à la suite d'une séparation en très basse altitude, la vitesse conventionnelle de l'arme étant supérieure à la valeur seuil donnée ; et
- la figure 5 illustre des étapes de guidage à la suite d'une séparation en HA.

DESCRIPTION D'UN OU PLUSIEURS MODES DE MISE EN OEUVRE DE L'INVENTION

On se place dans le cas d'une arme 100 du type de celle illustrée sur la figure 2.

## LE PRINCIPE DE LA SEPARATION VERS L'ARRIERE.

On a représenté sur la figure 3 la séparation d'une telle arme 100 par l'arrière d'un porteur 200.

On notera qu'une séparation vers l'arrière présente de nombreux avantages.

En particulier, elle permet de simplifier considérablement la procédure de largage de l'arme et d'améliorer de façon significative la sécurité du porteur 200.

La séparation par l'arrière requiert une impulsion faible et de plus longue durée qu'une séparation vers l'avant.

Ceci permet de réduire le nombre d'excursions dans le domaine supersonique en haute altitude, et de réduire par conséquent les contraintes sur la conception de l'arme.

Par ailleurs, le déclenchement des moyens de propulsion 102 de l'arme n'est effectué qu'après une certaine durée, ce qui permet d'être sûr que l'arme ne rattrape pas le porteur 200. On établit ainsi rapidement une distance 300 de sécurité minimale entre l'arme et le porteur.

En outre, comme l'arme 100 est derrière le porteur 200, celui-ci ne craint aucunement les rejets de gaz par les moyens de propulsion 102.

## DIFFERENTS TYPES DE TRAJECTOIRE : CAS D'UN TIR "TBA" OU D'UN TIR "HA".

Il est souhaitable de donner à l'arme 100 un comportement différent selon que le porteur 200 se situe en haute altitude ou en très basse altitude au moment de la séparation.

Tir en basse altitude

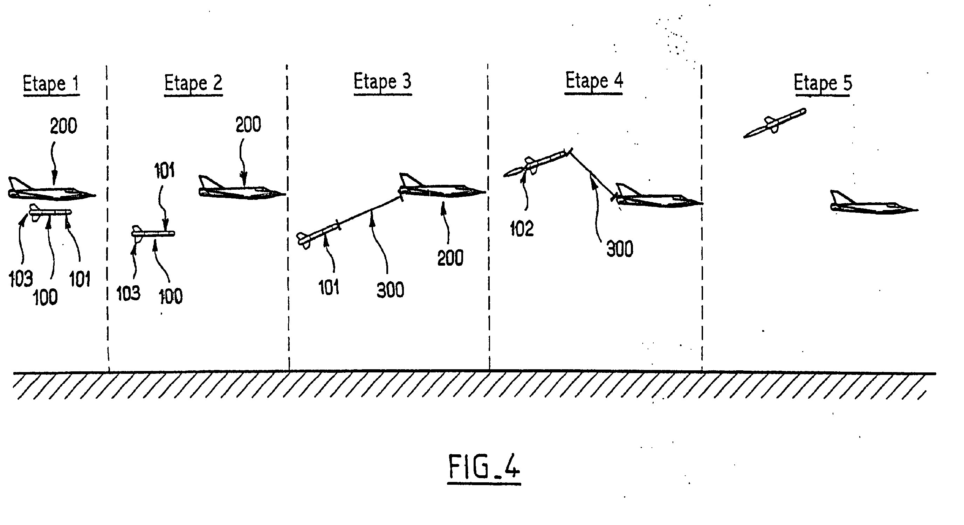

Dans le cas d'un tir en TBA, on fait effectuer à l'arme 100, ainsi que l'illustre la figure 4 (qui sera décrite plus loin de façon plus détaillée), une ressource positive après un certain temps prédéterminé.

Ceci permet un meilleur contrôle de la trajectoire de l'arme 100 et permet d'éviter le sol. Notamment, la ressource positive augmente la traînée de l'arme 100 par prise d'incidence de son axe par rapport à la trajectoire et ainsi diminue sa vitesse.

Cette ressource positive s'effectue pour que l'arme possède un facteur de charge maximal.

(On rappelle que le facteur de charge n se définit par

$$n = \cos \varphi + V^2 / (R\,g)$$

où $\varphi$ est l'angle d'inclinaison de l'avion avec la verticale ;
V est la vitesse aérodynamique de l'avion dans l'air ;
R est le rayon de courbure de la trajectoire de l'avion ;

g est l'accélération de la pesanteur.)

Si l'arme possède un facteur de charge égal à 1, elle effectue un vol stationnaire. Lorsque le facteur de charge est supérieur à 1, l'arme possède une trajectoire ascendante. Un facteur de charge inférieur à 1 signifie que l'arme descend.

Tir en haute altitude

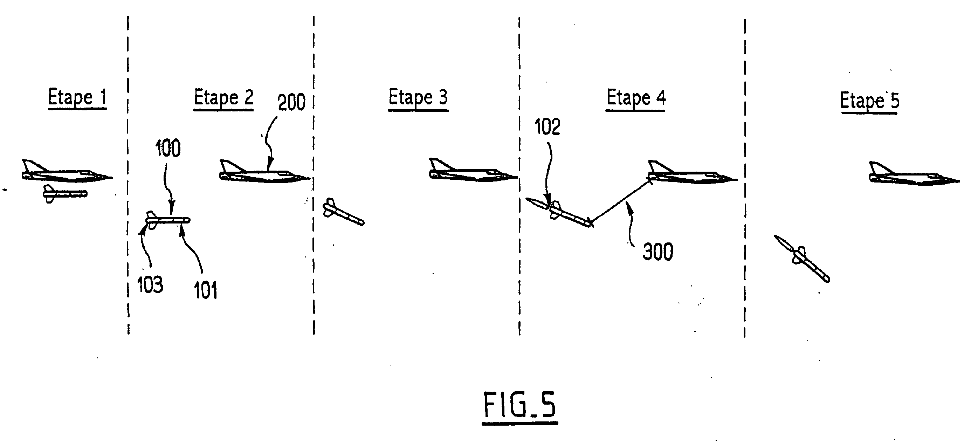

Dans le cas d'un tir en haute altitude, du fait de la séparation par l'arrière et de l'altitude, l'arme n'a pas assez d'énergie pour effectuer une ressource positive. Une ressource négative est alors imposée à l'arme (figure 5). Ce choix du réglage de l'inclinaison négative se fait également avec un facteur de charge maximal, mais cette fois inférieur à 1.

***CRITERE DE SELECTION DES DIFFERENTS TYPES DE TRAJECTOIRES : VITESSE CONVENTIONNELLE***

Pour simplifier les moyens embarqués sur l'arme, il n'est pas prévu sur celle-ci de senseur d'altitude.
Par contre, celle-ci dispose d'une centrale inertielle intégrée dans les moyens de gestion de contrôle et de gestion 103.
Pour permettre à l'arme 100 - en même temps qu'au porteur 200 - de déterminer le cas de figure dans lequel on se trouve (tir HA, tir TBA à vitesse suffisante pour une ressource positive, tir HA à vitesse insuffisante) on détermine une vitesse appelée vitesse conventionnelle qui est fonction de la vitesse initiale de l'arme, ainsi que de l'altitude qui est celle du porteur et de l'arme au moment du tir.
(On rappelle que la vitesse conventionnelle est la vitesse indiquée par un anémomètre parfait, sans erreurs instrumentales et sans erreur de prise de pression.)
Cette vitesse conventionnelle calculée par les moyens de gestion 103 est comparée à une valeur seuil.
Si la vitesse conventionnelle est supérieure à cette valeur seuil, alors les moyens de gestion 103 commandent les gouvernes de pilotage 101 pour que l'arme effectue une ressource positive (facteur de charge supérieur à 1).
Par contre, si la vitesse conventionnelle de l'arme est inférieure à la valeur seuil, l'arme effectue une ressource négative (facteur de charge inférieur à 1).
En parallèle au calcul qui est effectué par les moyens 103 sur l'arme 100, un calcul de vitesse conventionnelle est effectué par des moyens embarqués sur le porteur 200, ce qui est possible puisque les vitesse et altitude initiales du porteur et de l'arme sont identiques.
Des moyens d'affichage à l'intérieur du porteur 200 permettent au pilote de savoir quel est le cas de figure dans lequel il se trouve (vitesse conventionnelle supérieure ou non au seuil précité) et donc de connaître quelle va être la trajectoire de l'arme après sa séparation.
Il est par exemple prévu un cadran sur lequel se déplace un curseur qui est fonction de la vitesse conventionnelle et sur lequel est représenté un repère qui au pilote permet de savoir si la vitesse conventionnelle est au-dessus ou en-dessous du seuil.
La sécurité est encore une fois accrue puisque le pilote peut savoir si l'arme va monter ou descendre lors de sa phase de séparation.
Comme on l'aura compris, le critère qui vient d'être décrit - dans la mesure où il utilise l'altitude initiale du porteur et de l'arme - permet d'éviter d'avoir à prévoir sur l'arme un senseur d'altitude.
Le critère de sélection des différents types de trajectoire pour l'arme est à cet égard simple, facile à développer, fiable et peu cher.
Il est en outre valable pour une gamme de vitesses de vol particulièrement large.
A titre d'exemple, la vitesse conventionnelle seuil peut être environ égale à 380 noeuds.
La ressource est déclenchée 1.5 à 2 secondes après la séparation de l'arme d'avec le porteur.

***GUIDAGE INITIAL EN BOUCLE OUVERTE.***

Les différentes phases de guidage de l'arme 100 après sa séparation du porteur 200 vont maintenant être décrites.
On notera à cet égard que le guidage en boucle fermée de l'arme 100 sur sa cible n'est effectué qu'après un certain délai (environ 10 secondes), ce qui augmente la sécurité du porteur 200.
Avant le déclenchement du guidage en boucle fermée, on fait effectuer à l'arme 100 une manoeuvre prédéterminée et reproductible consistant en un guidage en boucle ouverte.
Le porteur a donc le temps de se dégager tout en connaissant la position de l'arme.
Ce laps de temps permet d'établir une distance de sécurité (référencée par 300 sur la figure 3) entre l'arme 100 et le porteur 200. La distance de sécurité est avantageusement supérieure 50 mètres.
La phase balistique pendant laquelle l'arme n'est pas propulsée dure environ 5 secondes. Après ce temps, la propulsion est enclenchée.

Tir en Basse Altitude.

On se réfère à nouveau aux figures 4 à 5 sur lesquelles on a représenté les étapes de la séparation par l'arrière et du guidage en boucle ouverte.
Dans une première étape (étape 1), l'arme 100 est séparée physiquement d'avec le porteur 200.
Cette séparation s'effectue sous la forme d'un largage du type de celui qui est utilisé pour les bombes lisses, à savoir en dessous de l'appareil 200 avec les gouvernes 101 de l'arme inactives. L'arme 100 commence à perdre de l'énergie par rapport au porteur 200. La distance entre l'arme 100 et le porteur 200 augmente petit à petit.

Une fois cette séparation effectuée, l'arme 100 commence à tomber en phase balistique (étape 2). Des ailes (situées à l'arrière de l'arme 100) et/ou des gouvernes (situées à l'avant de l'arme 100) sont déployées, ce qui augmente la traînée de l'arme en phase balistique et contribue à la ralentir par rapport au porteur.

Puis, après un certain temps de phase balistique (la phase balistique est par exemple de l'ordre de 1.5 à 2 s), on active les gouvernes 101 pour, selon que la vitesse conventionnelle de l'arme est ou non supérieure au seuil auquel elle est comparée, faire effectuer à l'arme 100 une ressource positive ou une ressource négative.

La distance entre l'arme 100 et le porteur 200 augmente encore du fait de l'augmentation de la traînée de l'arme due à sa prise d'incidence.

Lorsque la pente de montée est atteinte, les moyens de propulsion 102 sont mis en route.

Ainsi, les moyens de propulsion ne sont déclenchés qu'après un certain temps, suffisant pour que l'arme soit alors à une distance de sécurité par rapport à l'appareil (il y a généralement au moins 5 secondes entre le largage et le déclenchement de la propulsion).

Dans le cas illustré sur la figure 4 d'une ressource positive, l'impulsion donnée par les moyens de propulsion est initialement de faible intensité, ce qui permet de maintenir la distance de sécurité 300.

Après un certain temps, l'arme 100 ayant, le cas échéant, pris de la pente et s'étant éloignée de la zone de sécurité, le pilotage de l'arme en boucle fermée sur sa cible est déclenchée (étape 5 - environ 10 secondes après le largage).

Comme on l'aura compris, toute la trajectoire de l'arme entre le largage et le déclenchement du guidage en boucle fermée est reproductible d'une séparation à l'autre et indépendante de la position de la cible.

Dans le cas maintenant qui est celui illustré sur la figure 5, où la vitesse conventionnelle de l'arme est inférieure au seuil fixé et où les moyens 103 commandent les gouvernes 101 pour donner à l'arme 100 une ressource négative, la propulsion est également déclenchée lorsque la pente de descente est atteinte.

## Revendications

1. Procédé pour la séparation par rapport à un porteur (200) de type aéronef, d'une arme (100) aéroportée comportant des moyens de propulsion (102) et ainsi que des moyens (101, 103) permettant son guidage automatique sur une cible, lesdits moyens incluant des gouvernes, l'arme étant propulsée, lorsque les moyens de propulsion sont enclenchés, dans une direction selon laquelle il y aurait un risque que l'arme ne rattrape le porteur, **caractérisé en ce que** :

   - à la séparation de l'arme par rapport au porteur et pendant une première phase de chute balistique, les moyens de propulsion (102) de l'arme (100) ne sont pas enclenchés et les gouvernes restent inactives,
   - après la première phase de chute balistique, les gouvernes sont activées et commandées pour faire prendre à l'arme (100) une incidence qui augmente sa traînée et la ralentit par rapport au porteur (200) pour la faire passer derrière celui-ci,
   - et on ne déclenche la propulsion et le guidage automatique de l'arme vers sa cible qu'après un certain temps prédéterminé, permettant un éloignement supérieur à une distance de sécurité minimale entre l'arme et le porteur.

2. Procédé selon la revendication 1, **caractérisé que** l'on déclenche la propulsion sensiblement lorsque l'arme (100) a atteint une pente de montée de descente qui correspond un facteur de charge maximal.

3. Procédé selon l'une des revendications 1 ou 2, **caractérisé en ce qu'**on détermine si l'on donne à l'arme une incidence positive ou une incidence négative en fonction de la vitesse et de l'altitude de l'arme et du porteur à la séparation.

4. Procédé selon la revendication 3, **caractérisé en ce qu'**on détermine, en fonction de la vitesse et de l'altitude de l'arme (100) et du porteur (200) à la séparation, une valeur de vitesse conventionnelle, en ce qu'on compare la valeur de vitesse conventionnelle ainsi obtenue à une valeur seuil, et en ce que, en fonction du résultat de cette comparaison, on détermine si l'on donne à l'arme une incidence positive ou une incidence négative.

5. Procédé selon la revendication 1, **caractérisé en ce que** une distance de sécurité minimale est de 50 m ou supérieure.

6. Arme (100) aéroportée du type comportant des moyens de propulsion (102) ainsi que des moyens (101, 103) permettant son guidage automatique sur une cible qui lui est désignée, lesdits moyens incluant des gouvernes de pilotage (101) et des moyens de contrôle et de gestion (103), **caractérisé en ce que** les moyens de contrôle et de gestion (103) sont prévus pour ne pas enclencher les moyens de propulsion (102) et maintenir les gouvernes (101) inactives au moment de la séparation de l'arme par rapport à un porteur (200) de type aéronef et pendant une première phase de chute balistique, pour ensuite activer et commander les gouvernes (101) afin de faire prendre à l'arme (100) une incidence qui augmente sa traînée et la ralentit par rapport au porteur (200) de façon à la faire passer derrière celui-ci, et pour enfin déclencher la propulsion et le guidage automatique de l'arme vers sa cible après un certain temps prédéterminé permettant un éloignement supérieur à une distance de sécurité minimale entre l'arme et le porteur.

7. Système pour la gestion du tir, à partir d'un porteur de type aéronef, d'une arme (100) aéroportée comportant des moyens de propulsion (102) et ainsi que des moyens (101) permettant son guidage automatique sur une cible, **caractérisé en ce qu'**il comporte dans l'aéronef des moyens permettant l'affichage à destination d'un pilote d'une information relative à la vitesse conventionnelle déterminée ou susceptible de l'être lors de la mise en oeuvre d'un procédé conforme à la revendication 4.

## Claims

1. Method for separating relative to a carrier (200) of the aircraft type, an airborne weapon (100) comprising propulsion means (102) and means (101, 103) allowing its automatic guidance to a target,
said means including control surfaces, the weapon being propelled, when the propulsion means are triggered, in a direction in which there would be a risk that the weapon catches up with the carrier, **characterized in that**:

 - on separation of the weapon relative to the carrier and during a first phase of ballistic fall, the propulsion means (102) of the weapon (100) are not triggered and the control surfaces remain inactive,
 - after the first phase of ballistic fall, the control surfaces are activated and operated to cause the weapon (100) to adopt an incidence that increases its drag and slows it relative to the carrier (200) to cause it to pass behind the latter,
 - and the automatic guidance and propulsion of the weapon to its target is triggered only after a certain predetermined time, allowing a distancing greater than a minimum safety distance between the weapon and the carrier.

2. Method according to Claim 1, **characterized in that** the propulsion is triggered substantially when the weapon (100) has reached a gradient of climb/descent that corresponds to a maximum load factor.

3. Method according to one of Claims 1 or 2, **characterized in that** it is determined whether to give the weapon a positive incidence or a negative incidence according to the speed and altitude of the weapon and of the carrier on separation.

4. Method according to Claim 3, **characterized in that**, according to the speed and the altitude of the weapon (100) and of the carrier (200) on separation, a conventional speed value is determined, **in that** the conventional speed value thus obtained is compared with a threshold value, and **in that**, according to the result of this comparison, it is determined whether the weapon is given a positive incidence or a negative incidence.

5. Method according to Claim 1, **characterized in that** a minimum safety distance is 50 m or more.

6. Airborne weapon (100) of the type comprising propulsion means (102) and means (101, 103) allowing its automatic guidance to a target that is designated to it, said means including guidance control surfaces (101) and control and management means (103), **characterized in that** the control and management means (103) are set so as not to trigger the propulsion means (102) and keep the control surfaces (101) inactive at the moment of separation of the weapon from a carrier (200) of the aircraft type and during a first phase of ballistic fall, so as to subsequently activate and operate the control surfaces (101) in order to cause the weapon (100) to adopt an incidence that increases its drag and slows it down relative to the carrier (200) in order to make it pass behind the latter, and in order finally to trigger the automatic guidance and propulsion of the weapon to its target after a certain predetermined time allowing a distancing greater than a minimum safety distance between the weapon and the carrier.

7. System for managing the firing, from a carrier of the aircraft type, of an airborne weapon (100) comprising means of propulsion (102) and means (101) allowing its automatic guidance to a target, **characterized in that** it comprises means in the aircraft allowing information, relating to the conventional speed determined or likely to be determined when a method according to Claim 4 is applied, to be displayed for a pilot.

## Patentansprüche

1. Verfahren zum Loslösen, von einem Träger (200) vom Typ eines Luftfahrzeugs, einer luftgestützten Waffe (100), die Antriebsmittel (102) umfaßt, sowie auch Mittel (101, 103), die ihre automatische Führung zu einem Ziel gestatten, wobei die Mittel Ruder umfassen und die Waffe, wenn die Antriebsmittel eingeschaltet sind, in eine Richtung angetrieben wird, in der ein Risiko besteht, daß die Waffe den Träger trifft, **dadurch gekennzeichnet, daß**

 - beim Loslösen der Waffe vom Träger und während einer ersten Phase mit ballistischem Fall die Antriebsmittel (102) der Waffe (100) nicht eingeschaltet sind und die Ruder inaktiv bleiben, nach der ersten Phase mit ballistischem Fall die Ruder aktiviert und so gesteuert werden, daß die Waffe (100) einen Anstellwinkel annimmt, der ihren Luftwiderstand erhöht und sie relativ zum Träger (200) abbremst, um sie hinter diesen zurückfallen zu lassen,

- und der Antrieb und die automatische Führung der Waffe in Richtung ihres Zieles erst nach einer bestimmten vorgegebenen Zeitdauer eingeschaltet werden, die die Aufnahme eines Abstands gestattet, der größer als ein minimaler Sicherheitsabstand zwischen der Waffe und dem Träger ist.

2. Verfahren nach Anspruch 1, **dadurch gekennzeichnet, daß** der Antrieb im wesentlichen dann ausgelöst wird, wenn die Waffe (100) eine Aufstiegs- oder Abstiegsneigung erreicht hat, die einem maximalen Lastfaktor entspricht.

3. Verfahren nach einem der Ansprüche 1 oder 2, **dadurch gekennzeichnet, daß** in Abhängigkeit von der Geschwindigkeit und der Höhe der Waffe und des Trägers beim Loslösen bestimmt wird, ob der Waffe ein positiver Anstellwinkel oder ein negativer Anstellwinkel gegeben wird.

4. Verfahren nach Anspruch 3, **dadurch gekennzeichnet, daß** in Abhängigkeit von der Geschwindigkeit und der Höhe der Waffe (100) und des Trägers (200) beim Loslösen ein Wert der konventionellen Geschwindigkeit bestimmt wird, **dadurch**, daß der so erhaltene Wert der konventionellen Geschwindigkeit mit einem Schwellwert verglichen wird und **dadurch**, daß in Abhängigkeit vom Ergebnis dieses Vergleichs bestimmt wird, ob der Waffe ein positiver Anstellwinkel oder ein negativer Anstellwinkel gegeben wird.

5. Verfahren nach Anspruch 1, **dadurch gekennzeichnet, daß** ein minimaler Sicherheitsabstand 50 m oder mehr beträgt.

6. Luftgestützte Waffe (100) vom Typ der folgendes umfaßt: Antriebsmittel (102) sowie Mittel (101, 103), die ihre automatische Führung zu einem ihr zugewiesenen Ziel gestatten, wobei diese Mittel Steuerruder (101) und Mittel zur Steuerung und Verwaltung (103) umfassen, **dadurch gekennzeichnet, daß** die Mittel zur Steuerung und Verwaltung (103) dafür eingerichtet sind, zum Zeitpunkt des Loslösens der Waffe von einem Träger (200) vom Typ eines Luftfahrzeugs und während einer ersten Phase mit ballistischem Fall, die Antriebsmittel (102) nicht einzuschalten und die Ruder (101) inaktiv zu halten, um anschließend die Ruder (101) zu aktivieren und zu steuern, um der Waffe (100) einen Anstellwinkel zu geben, der ihren Luftwiderstand erhöht und sie relativ zum Träger (200) abbremst, derart, daß sie hinter diesen zurückfällt, und um schließlich den Antrieb und die automatische Führung der Waffe zu ihrem Ziel nach einer bestimmten vorgegebenen Zeitdauer einzuschalten, die die Aufnahme eines Abstands gestattet, der größer als ein minimaler Sicherheitsabstand zwischen der Waffe und dem Träger ist.

7. System zur Steuerung des Abfeuerns, ausgehend von einem Träger vom Typ eines Luftfahrzeugs, einer luftgestützten Waffe (100), die Antriebsmittel (102) umfasst sowie Mittel (101), die ihre automatische Führung zu einem Ziel gestatten, **dadurch gekennzeichnet, daß** es im Luftfahrzeug Mittel umfaßt, die die Anzeige einer Information für einen Piloten umfassen, die die konventionelle Geschwindigkeit betrifft, die beim Auslösen eines Verfahrens gemäß Anspruch 4 festgestellt wird oder feststellbar ist.

200    100

102    101

<u>FIG.1</u>

102    100    101

103

<u>FIG.2</u>

200
300
101
102

<u>FIG.3</u>

EP 1 266 825 B1

Etape 1    Etape 2    Etape 3    Etape 4    Etape 5

200    200    200    300    102    300

101    101    101
103    101    103    100    101    300
100

FIG.4

FIG.5

Etape 1

Etape 2
200
100
101
103

Etape 3

Etape 4
300
102

Etape 5

**EP 1 266 825 B1**

## RÉFÉRENCES CITÉES DANS LA DESCRIPTION

**Documents brevets cités dans la description**

- EP 0562831 A1